# EUROPEAN PATENT SPECIFICATION

(11) **EP 4 224 050 B1**
(45) Date of publication and mention of the grant of the patent: **31.01.2024**
(21) Application number: 22188585.8
(22) Date of filing: 03.08.2022
(51) Int. Cl.: F16L 37/32

(54) **QUICK CONNECTOR WITH TWO-WAY CHECK FUNCTION**
SCHNELLVERBINDER MIT ZWEIWEG-PRÜFFUNKTION
CONNECTEUR RAPIDE AVEC FONCTION DE VÉRIFICATION BIDIRECTIONNELLE

(30) Priority: 18.01.2022 CN 202210054454
(43) Date of publication of application: 09.08.2023
(73) Proprietor: Yatomi Technology (Zhejiang) Co., Ltd., Zhejiang 314100 (CN)
(72) Inventor: GU, Qiang, JiaShan County, ZheJiang Province, 314100 (CN); WANG, Jitao, JiaShan County, ZheJiang Province, 314100 (CN)
(74) Representative: Ipside

(56) References cited:
- CN-A- 106 931 260
- CN-B- 111 473 181

## Description

### Technical Field

The present invention relates to the field of vehicle pipeline systems, and in particular to a quick connector with a two-way check function.

### Background of the Invention

### Description of Related Art

At present, quick connector assemblies have been widely used in vehicle pipeline systems. The quick connector assembly generally includes a quick connector and a quick plug. When in use, the quick plug is plugged into the quick connector, and snap-fastening is achieved through corresponding snap-in structure, so as to achieve the quick-plug function.

However, during the plugging process of the existing quick-plug structure, since there is liquid in the pipeline, liquid in the pipeline flows out from the position of the quick connector and the quick plug when the quick connector and the quick plug are separated. In addition, it is difficult for the existing check structure to achieve the check function of the quick connector and the quick plug at the same time, and it is also impossible to achieve the check effect through the plug-in function.

Therefore, it is necessary for us to improve such a structure, to overcome the above-mentioned defects.

Patent document CN111473181B discloses an ultrahigh-pressure gas pipeline quick plug connector provided with a protecting device and an operating method of the ultrahigh-pressure gas pipeline quick plug connector.

Patent document CN106931260A a high-pressure pipeline rapid connector. The rapid connector comprises a first connector body and a second connector body which are provided with butt joint ends.

### Summary of the Invention

The present invention is set out in the appended set of claims.

The present invention aims to provide a quick connector with a two-way check function, which achieves the quick-plug function and has a two-way check function at the same time, so as to prevent liquid in a pipeline connected to the quick plug and the quick connector from flowing out during plugging and unplugging, and improve the convenience and reliability of use.

The above-mentioned technical purpose of the present invention is achieved through the following technical solution: the quick connector with a two-way check function includes a quick plug and a quick connector, between the quick plug and the quick connector being arranged a two-way check mechanism, the two-way check mechanism including a first plugging block slidably connected to an inner cavity of the quick plug, a first elastic member arranged in the inner cavity of the quick plug and driving the first plugging block to move towards the direction of the quick connector, a second plugging block slidably connected to an inner cavity of the quick connector, a second elastic member arranged in the quick connector and driving the second plugging block to move towards the direction of the quick plug and an ejector rod arranged in the second plugging block and capable of pushing the first plugging block after being plugged in the quick plug, the first elastic member driving the first plugging block to be capable of plugging the quick plug after moving towards the direction of the quick connector and the second elastic member driving the second plugging block to be capable of plugging the quick connector after moving towards the direction of the quick plug when the quick plug is separated from the quick connector.

The present invention may be further provided as follows: a mounting head connected to a pipeline is arranged at one end, facing away from the quick connector, of the quick plug, a movable cavity for accommodating the first plugging block being arranged at the position of the connection end between the mounting head and the quick plug, a plugging head portion being arranged at one end, facing the quick connector, of the first plugging block, the plugging head portion being provided with a first sealing ring, a convex ring for the plugging head portion and the first sealing ring to abut against being integrally formed on the inner wall of the quick plug.

The present invention may be further provided as follows: the inner wall of the mounting head is fixedly connected to a limit lever for one end, facing away from the first plugging block, of the first elastic member to abut against.

The present invention is further provided as follows: the first plugging block is provided with an abutting groove for accommodating and for the first elastic member to abut against, the side wall of the abutting groove being provided with a plurality of hollow grooves, the side wall of the first plugging block being provided with a plurality of guide plates for guiding the moving direction of the first plugging block.

The present invention may be further provided as follows: the inner cavity of the quick connector is provided with a fixing ring, a second sealing ring being arranged between the fixing ring and the inner wall of the quick connector, and the second plugging block is provided with a third sealing ring capable of abutting against the fixing ring, and one end, facing away from the quick plug, of the fixing ring being used for the second plugging block and the third sealing ring to abut against and achieving seal.

The present invention may be further provided as follows: the second elastic member is a spring, and is located in the inner cavity of the fixing ring, one end, close to the second plugging block, of the second elastic member being mounted at the fixing ring, the ejector rod being fixedly provided with an abutting portion for fixing the other end of the second elastic member, and the end part of the quick plug is capable of abutting the abutting portion after the ejector rod abuts and pushes the first plugging block to move a certain distance.

The present invention may be further provided as follows: the inner wall of the fixing ring is provided with a chute for guiding the abutting portion, the abutting portion being slidably connected to the chute, and the end surface, away from the ejector rod, of the abutting portion being provided with an inclined surface which is convenient for the abutting portion to be snapped into the chute from the inner cavity of the fixing ring.

The present invention may be is further provided as follows: the abutting portion and the chute are both arranged to be evenly distributed around the ejector rod.

The present invention may be further provided as follows: the abutting portion is provided with a snapping groove into which the end part of the second elastic member is snapped.

The present invention may be further provided as follows: the inner wall of the quick connector is provided with a mounting groove for mounting the fixing ring, the fixing ring abutting on the bottom surface of the mounting groove and defining the position of the fixing ring, the second sealing ring being located between the side wall of the fixing ring and the side wall of the mounting groove.

In summary, the present invention has the following beneficial effects:
When the quick plug is separated from the quick connector, the first elastic member can plug the quick plug after driving the first plugging block to move towards the quick connector, and the second elastic member can plug the quick connector after driving the second plugging block to move towards the quick plug. When the quick plug is plugged into the quick connector, the ejector rod extends into the inner cavity of the quick plug and can push the first plugging block, the ejector rod pushes the first plugging block to move a certain distance facing away from the quick connector and then releases the function of the first plugging block from plugging the quick plug. At the same time, after the ejector rod and the second plugging block are subjected to the force, the ejector rod and the second plugging block move relative to the quick connector, so as to release the function of the second plugging block from plugging the quick connector and achieve liquid flow between the quick connector and the quick plug.

Before the mounting head is fixed to the quick connector, the first plugging block and the first elastic member are installed in the movable cavity in advance. The outer diameter of the first plugging block is smaller than that of the movable cavity. When the ejector rod pushes the first plugging block, the first elastic member is in a compressed state, and the convex ring is separated from the plugging head portion, so as to achieve liquid flow on both sides of the first plugging member. When the ejector rod fails to abut the first plugging block, the first elastic member pushes the first plugging block, so that the plugging head portion and the first sealing ring abut the convex ring and achieve the sealing effect; in addition, the flow of liquid in the mounting head is facilitated through the limit lever, and a compact structure is achieved and the overall weight is reduced through the above-mentioned structure.

The second plugging block is driven by the second elastic member to move towards the direction of the fixing ring, and after the second plugging block and the third sealing ring abut the end surface of the fixing ring, the quick connector is effectively sealed. When the ejector rod pushes the first plugging block, the ejector rod and the second plugging block move relative to the quick connector, and the third sealing ring is separated, thereby allowing liquid in the quick connector to flow.

One end of the second elastic member is fixed on the inner wall of the fixing ring, and the other end is fixed in the snapping groove, and the second elastic member is partially sleeved at the position of the snapping groove, so as to fix the position of the second elastic member. When the ejector rod is not subject to external force, the second elastic member drives the ejector rod and the second plugging block to move towards the quick plug to achieve the sealing function; in addition, after the ejector rod pushes the first plugging block and makes the first plugging block and/or the second plugging block have a certain distance, the end part of the quick plug can abut against the abutting portion, and ensure that the first elastic member and the second elastic member are both in a compressed state, so that liquid flow between the quick plug and the quick connector is achieved.

The abutting portion is slidably connected to the chute to guide the ejector rod and the second plugging block and prevent the ejector rod and the second plugging block from rotating. The length of the chute can define a certain distance of the second plugging block. Besides, when the ejector rod and the abutting portion are assembled on the fixing ring, the inclined surface abuts against the inner wall of the fixing ring, so that the elastic deformation of the abutting portion is achieved and the abutting portion is easily moved and snapped into the chute to achieve the effect of convenient assembly.

### Brief description of the Drawings

Fig. 1 is a schematic structure diagram of the present invention;
Fig. 2 is a sectional view of the present invention;
Fig. 3 is an A-part enlargement view of Fig. 2;
Fig. 4 is a schematic diagram of a second plugging block and ejector rod in the present invention; and
Fig. 5 is a schematic diagram of a first plugging block in the present invention.

The names of corresponding components indicated by the numbers in the figure: 1, quick plug; 2, quick connector; 3, first plugging block; 4, first elastic member; 5, second plugging block; 6, second elastic member; 7, ejector rod; 8, mounting head; 9, movable cavity; 10, plugging head portion; 11, first sealing ring; 12, convex ring; 13, limit lever; 14, abutting groove; 15, hollow groove; 16, guide plate; 17, fixing ring; 18, mounting groove; 19, abutting portion; 20, second sealing ring; 21, third sealing ring; 22, snapping groove; 23, chute; and 24, inclined surface.

### Detailed Description of Embodiments

In order to make the technical means, creation features, achievement goals and effects of the present invention easy to understand, the present invention will be further described below with reference to the drawings and specific embodiments.

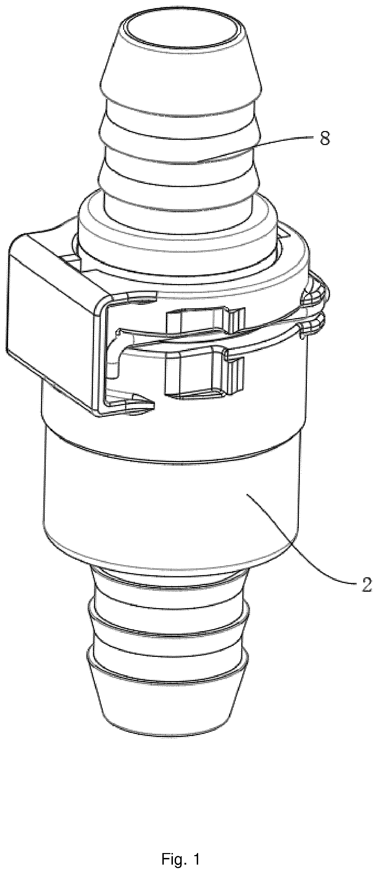

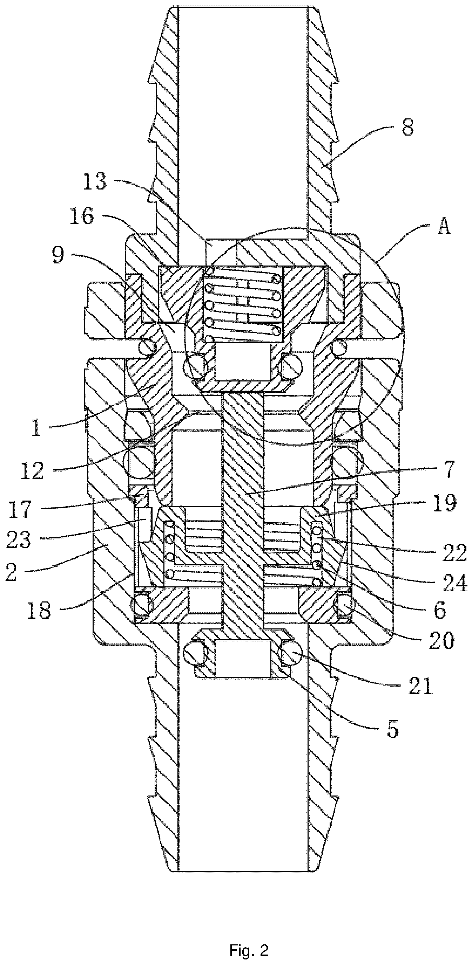

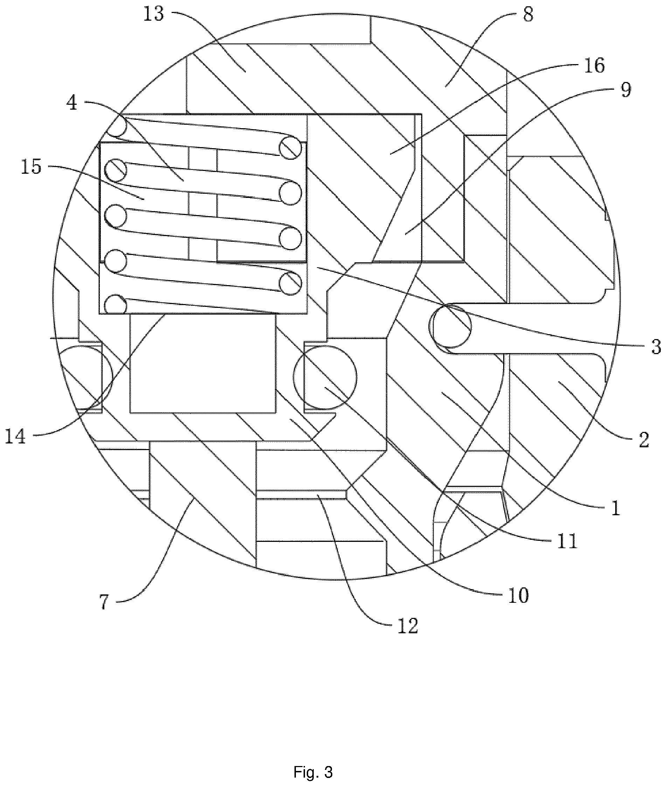

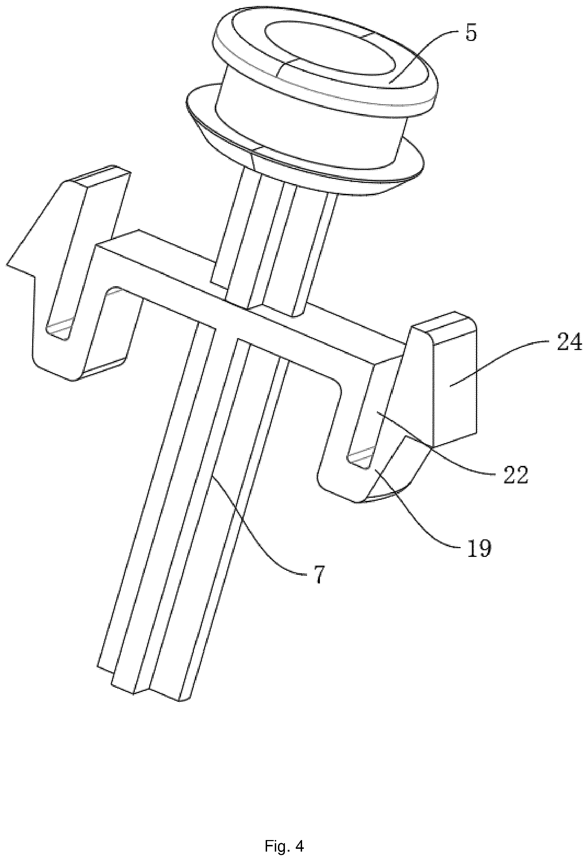

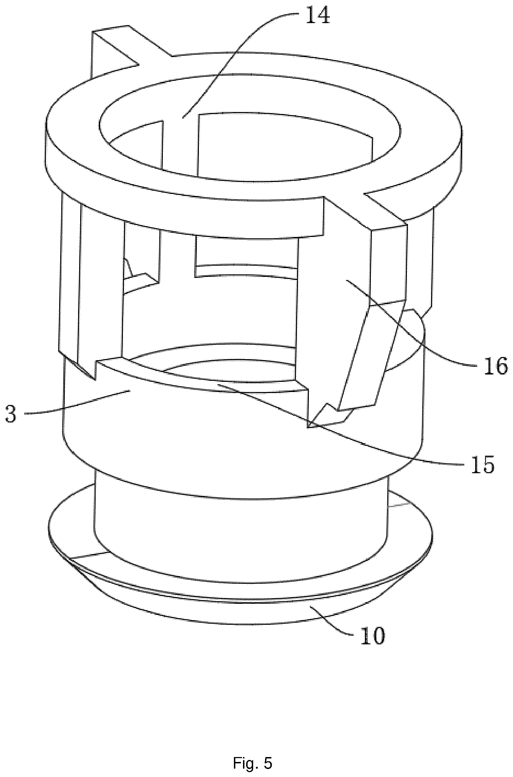

As shown in Fig. 1 to Fig. 5, a quick connector with a two-way check function proposed in the present invention includes a quick plug 1 and a quick connector 2, and the quick plug 1 can be plugged into the quick connector 2. A two-way check mechanism is arranged between the quick plug 1 and the quick connector 2. The two-way check mechanism includes a first plugging block 3 slidably connected to an inner cavity of the quick plug 1, a first elastic member 4 arranged in the inner cavity of the quick plug 1 and driving the first plugging block 3 to move towards the direction of the quick connector 2, a second plugging block 5 slidably connected to the inner cavity of the quick connector 2, a second elastic member 6 arranged in the quick connector 2 and driving the second plugging block 5 to move towards the direction of the quick plug 1 and an ejector rod 7 arranged in the second plugging block 5 and capable of pushing the first plugging block 3 after being plugged in the quick plug 1, where both the first elastic member 4 and the second elastic member 6 are springs.

When the quick plug 1 is separated from the quick connector 2, the first elastic member 4 can plug the quick plug 1 after driving the first plugging block 3 to move towards the quick connector 2, and the second elastic member 6 can plug the quick connector 2 after driving the second plugging block 5 to move towards the quick plug 1. When the quick plug 1 is plugged into the quick connector 2, the ejector rod 7 extends into the inner cavity of the quick plug 1 and can push the first plugging block 3, the ejector rod 7 pushes the first plugging block 3 to move a certain distance facing away from the quick connector 2 and then releases the function of the first plugging block 3 from plugging the quick plug 1. At the same time, after the ejector rod 7 and the second plugging block 5 are subjected to the force, the ejector rod 7 and the second plugging block 5 move relative to the quick connector 2, so as to release the function of the second plugging block 5 from plugging the quick connector 2 and achieve liquid flow between the quick connector 2 and the quick plug 1.

Where a mounting head 8 connected to the pipeline is arranged at one end, facing away from the quick connector 2, of the quick plug 1, and is welded and fixed to the quick connector 2. A movable cavity 9 for accommodating the first plugging block 3 is arranged at the position of the connection end between the mounting head 8 and the quick plug 1, and is communicated with the channel of the quick plug 1 the mounting head 8. A plugging head portion 10 is arranged at one end, facing the quick connector 2, of the first plugging block 3, and is fixedly provided with a first sealing ring 11. A convex ring 12 for the plugging head portion 10 and the first sealing ring 11 to abut against is integrally formed on the inner wall of the quick plug 1. The inner wall of the mounting head 8 is fixedly connected to a limit lever 13 for one end, facing away from the first plugging block 3, of the first elastic member 4 to abut against. The limit lever 13 is arranged in a Y shape and is flush with the end surface of the movable cavity 9. The first plugging block 3 is provided with an abutting groove 14 for accommodating and for the first end of the first elastic member 4 to abut against. The side wall of the abutting groove 14 is provided with a plurality of hollow grooves 15. The abutting groove 14 communicates with the outside of the first plugging block 3 to facilitate liquid flow. The side wall of the first plugging block 3 is provided with a plurality of guide plates 16 for guiding the moving direction of the first plugging block 3. The guide plate 16 can slide against the side wall of the movable cavity 9, and guide the moving direction of the first plugging block 3 through the guide plate 16. Before the mounting head 8 is fixed to the quick connector 2, the first plugging block 3 and the first elastic member 4 are installed in the movable cavity 9 in advance. The outer diameter of the first plugging block 3 is smaller than that of the movable cavity 9. When the ejector rod 7 pushes the first plugging block 3, the first elastic member 4 is in a compressed state, and the convex ring 12 is separated from the plugging head portion 10, so as to achieve liquid flow on both sides of the first plugging member. When the ejector rod 7 fails to abut the first plugging block 3, the first elastic member 4 pushes the first plugging block 3, so that the plugging head portion 10 and the first sealing ring 11 abut the convex ring 12 and achieve the sealing effect; in addition, the flow of liquid in the mounting head 8 is facilitated through the limit lever 13, and a compact structure is achieved and the overall weight is reduced through the above-mentioned structure.

The inner cavity of the quick connector 2 is provided with a fixing ring 17, and the inner wall of the quick connector 2 is provided with a mounting groove 18 for mounting the fixing ring 17, that is, the diameter of the mounting groove 18 is larger than the diameter of the inner channel of the quick connector 2. The fixing ring 17 abuts on the bottom surface of the mounting groove 18 and defines the position of the fixing ring 17. The side wall of the fixing ring 17 is provided with a second sealing ring 20, and the second sealing ring 20 is located between the side wall of the fixing ring 17 and the side wall of the mounting groove 18 and achieves the sealing effect. The second plugging block 5 is provided with a third sealing ring 21 that can abut on the end surface of the fixing ring 17, and one end, facing away from the quick plug 1, of the fixing ring 17 is for the second plugging block 5 and the third sealing ring 21 to abut against and achieves seal. The second plugging block 5 is driven by the second elastic member 6 to move towards the direction of the fixing ring 17, and after the second plugging block 5 and the third sealing ring 21 abut the end surface of the fixing ring 17, the quick connector 2 is effectively sealed. When the ejector rod 7 pushes the first plugging block 3, the ejector rod 7 and the second plugging block 5 move relative to the quick connector 2, and the third sealing ring 21 is separated, thereby allowing liquid in the quick connector 2 to flow.

The second elastic member 6 is located in the inner cavity of the fixing ring 17, and one end, close to the second plugging block 5, of the second elastic member 6 is mounted at the fixing ring 17. The ejector rod 7 is fixedly provided with an abutting portion 19 for fixing the other end of the second elastic member 6. In this embodiment, there are two abutting portions 19 symmetrically arranged on the ejector rod 7, and the abutting portion 19 is provided with a snapping groove 22 into which the end part of the second elastic member 6 is snapped. After the ejector rod 7 abuts and pushes the first plugging block 3 to move a certain distance, the end part of the quick plug 1 can abut against the abutting portion 19. In this embodiment, one end of the second elastic member 6 is fixed on the inner wall of the fixing ring 17, and the other end is fixed in the snapping groove 22, and the second elastic member 6 is partially sleeved at the position of the snapping groove 22, so as to fix the position of the second elastic member 6. When the ejector rod 7 is not subject to external force, the second elastic member 6 drives the ejector rod 7 and the second plugging block 5 to move towards the quick plug 1 to achieve the sealing function; in addition, after the ejector rod 7 pushes the first plugging block 3 and makes the first plugging block 3 and/or the second plugging block 5 have a certain distance, the end part of the quick plug 1 can abut against the abutting portion 19, and ensure that the first elastic member 4 and the second elastic member 6 are both in a compressed state, so that liquid flow between the quick plug 1 and the quick connector 2 is achieved.

The inner wall of the fixing ring 17 is provided with a chute 23 for guiding the abutting portion 19. The abutting portion 19 is slidably connected to the chute 23, and the end surface, away from the ejector rod 7, of the abutting portion 19 is provided with an inclined surface 24 that facilitates the abutting portion 19 to be snapped into the chute 23 from the inner cavity of the fixing ring 17. The abutting portion 19 is slidably connected to the chute 23 to guide the ejector rod 7 and the second plugging block 5 and prevent the ejector rod 7 and the second plugging block 5 from rotating. The length of the chute 23 can define a certain distance of the second plugging block 5. Besides, when the ejector rod 7 and the abutting portion 19 are assembled on the fixing ring 17, the inclined surface 24 abuts against the inner wall of the fixing ring 17, so that the elastic deformation of the abutting portion 19 is achieved and the abutting portion 19 is easily moved and snapped into the chute 23 to achieve the effect of convenient assembly.

## Claims

1. A quick connector with a two-way check function, comprising a quick plug (1) and a quick connector (2), between the quick plug (1) and the quick connector (2) being arranged a two-way check mechanism, the two-way check mechanism comprising a first plugging block (3) slidably connected to an inner cavity of the quick plug (1), a first elastic member (4) arranged in the inner cavity of the quick plug (1) and driving the first plugging block (3) to move towards the direction of the quick connector (2), a second plugging block (5) slidably connected to an inner cavity of the quick connector (2), a second elastic member (6) arranged in the quick connector (2) and driving the second plugging block (5) to move towards the direction of the quick plug (1) and an ejector rod (7) arranged in the second plugging block (5) and capable of pushing the first plugging block (3) after being plugged in the quick plug (1), the first elastic member (4) driving the first plugging block (3) to be capable of plugging the quick plug (1) after moving towards the direction of the quick connector (2) and the second elastic member (6) driving the second plugging block (5) to be capable of plugging the quick connector (2) after moving towards the direction of the quick plug (1) when the quick plug (1) is separated from the quick connector (2), the first plugging block (3) is provided with an abutting groove (14) for accommodating and for the first elastic member (4) to abut against, the side wall of the abutting groove (14) being provided with a plurality of hollow grooves (15), **characterized in that** the side wall of the first plugging block (3) being provided with a plurality of guide plates (16) for guiding the moving direction of the first plugging block (3).

2. The quick connector with the two-way check function according to claim 1, **characterized in that** a mounting head (8) connected to a pipeline is arranged at one end, facing away from the quick connector (2), of the quick plug (1), a movable cavity (9) for accommodating the first plugging block (3) being arranged at the position of the connection end between the mounting head (8) and the quick plug (1), a plugging head portion (10) being arranged at one end, facing the quick connector (2), of the first plugging block (3), the plugging head portion (10) being provided with a first sealing ring (11), a convex ring (12) for the plugging head portion (10) and the first sealing ring (11) to abut against being integrally formed on the inner wall of the quick plug (1).

3. The quick connector with the two-way check function according to claim 2, **characterized in that** the inner wall of the mounting head (8) is fixedly connected to a limit lever (13) for one end, facing away from the first plugging block (3), of the first elastic member (4) to abut against.

4. The quick connector with the two-way check function according to claim 1, **characterized in that** the inner cavity of the quick connector (2) is provided with a fixing ring (17), a second sealing ring (20) being arranged between the fixing ring (17) and the inner wall of the quick connector (2), and the second plugging block (5) is provided with a third sealing ring (21) capable of abutting against the fixing ring (17), one end, facing away from the quick plug (1), of the fixing ring (17) being used for the second plugging block (5) and the third sealing ring (21) to abut against and achieving seal.

5. The quick connector with the two-way check function according to claim 4, **characterized in that** the second elastic member (6) is a spring, and is located in the inner cavity of the fixing ring (17), one end, close to the second plugging block (5), of the second elastic member (6) being mounted at the fixing ring (17), the ejector rod (7) being fixedly provided with an abutting portion (19) for fixing the other end of the second elastic member (6), and the end part of the quick plug (1) is capable of abutting the abutting portion (19) after the ejector rod (7) abuts and pushes the first plugging block (3) to move a certain distance.

6. The quick connector with the two-way check function according to claim 5, **characterized in that** the inner wall of the fixing ring (17) is provided with a chute (23) for guiding the abutting portion (19), the abutting portion (19) being slidably connected to the chute (23), and the end surface, away from the ejector rod (7), of the abutting portion (19) being provided with an inclined surface (24) which is convenient for the abutting portion (19) to be snapped into the chute (23) from the inner cavity of the fixing ring (17).

7. The quick connector with the two-way check function according to claim 6, **characterized in that** the abutting portion (19) and the chute (23) are both arranged to be evenly distributed around the ejector rod (7).

8. The quick connector with the two-way check function according to claim 5, **characterized in that** the abutting portion (19) is provided with a snapping groove (22) into which the end part of the second elastic member (6) is snapped.

9. The quick connector with the two-way check function according to claim 4, **characterized in that** the inner wall of the quick connector (2) is provided with a mounting groove (18) for mounting the fixing ring (17), the fixing ring (17) abutting on the bottom surface of the mounting groove (18) and defining the position of the fixing ring (17), the second sealing ring (20) being located between the side wall of the fixing ring (17) and the side wall of the mounting groove (18).

## Patentansprüche

1. Schnellverbinder mit einer Zweiwege-Prüffunktion, der einen Schnellstecker (1) und einen Schnellverbinder (2) umfasst, wobei zwischen dem Schnellstecker (1) und dem Schnellverbinder (2) ein Zweiwege-Prüfmechanismus angeordnet ist, wobei der Zweiwege-Prüfmechanismus einen ersten Steckblock (3), der verschiebbar mit einem inneren Hohlraum des Schnellsteckers (1) verbunden ist, ein erstes elastisches Element (4), das im inneren Hohlraum des Schnellsteckers (1) angeordnet ist und den ersten Steckblock (3) so antreibt, dass er sich in Richtung des Schnellverbinders (2) bewegt, einen zweiten Steckblock (5), der verschiebbar mit einem inneren Hohlraum des Schnellverbinders (2) verbunden ist, ein zweites elastisches Element (6), das im Schnellverbinder (2) angeordnet ist und den zweiten Steckblock (5) so antreibt, dass er sich in Richtung des Schnellsteckers (1) bewegt, und eine Auswerferstange (7) umfasst, die im zweiten Steckblock (5) angeordnet und in der Lage ist, den ersten Steckblock (3) zu schieben, nachdem er in den Schnellstecker (1) eingesteckt wurde, wobei das erste elastische Element (4) den ersten Steckblock (3) antreibt, um in der Lage zu sein, den Schnellstecker (1) nach Bewegen in Richtung des Schnellverbinders (2) einzustecken, und das zweite elastische Element (6) den zweiten Steckblock (5) antreibt, um in der Lage zu sein, den Schnellverbinder (2) nach Bewegen in Richtung des Schnellsteckers (1) einzustecken, wenn der Schnellstecker (1) vom Schnellverbinder (2) getrennt ist, wobei der erste Steckblock (3) mit einer Anschlagnut (14) zum Aufnehmen und als Anschlag für das erste elastische Element (4) versehen ist, wobei die Seitenwand der Anschlagnut (14) mit einer Vielzahl von Hohlnuten (15) versehen ist, **dadurch gekennzeichnet, dass** die Seitenwand des ersten Steckblocks (3) mit einer Vielzahl von Führungsplatten (16) zum Führen der Bewegungsrichtung des ersten Steckblocks (3) versehen ist.

2. Schnellverbinder mit der Zweiwege-Prüffunktion nach Anspruch 1, **dadurch gekennzeichnet, dass** an einem dem Schnellverbinder (2) abgewandten Ende des Schnellsteckers (1) ein mit einer Rohrleitung verbundener Montagekopf (8) angeordnet ist, wobei an der Position des Verbindungsendes zwischen dem Montagekopf (8) und dem Schnellstecker (1) ein beweglicher Hohlraum (9) zum Aufnehmen des ersten Steckblocks (3) angeordnet ist, wobei an einem dem Schnellverbinder (2) zugewandten Ende des ersten Steckblocks (3) ein Steckkopfabschnitt (10) angeordnet ist, wobei der Steckkopfabschnitt (10) mit einem ersten Dichtungsring (11) versehen ist, wobei ein konvexer Ring (12) als Anschlag für den Steckkopfabschnitt (10) und den ersten Dichtungsring (11) einstückig an der inneren Wand des Schnellsteckers (1) gebildet ist.

3. Schnellverbinder mit der Zweiwege-Prüffunktion nach Anspruch 2, **dadurch gekennzeichnet, dass** die innere Wand des Montagekopfes (8) fest mit einem Begrenzungshebel (13) als Anschlag für ein dem ersten Steckblock (3) abgewandtes Ende des ersten elastischen Elements (4) verbunden ist.

4. Schnellverbinder mit der Zweiwege-Prüffunktion nach Anspruch 1, **dadurch gekennzeichnet, dass** der innere Hohlraum des Schnellverbinders (2) mit einem Befestigungsring (17) versehen ist, wobei zwischen dem Befestigungsring (17) und der inneren Wand des Schnellverbinders (2) ein zweiter Dichtungsring (20) angeordnet ist, und der zweite Steckblock (5) mit einem dritten Dichtungsring (21) versehen ist, der in der Lage ist, am Befestigungsring (17) anzuschlagen, wobei ein dem Schnellstecker (1) abgewandtes Ende des Befestigungsrings (17) als Anschlag für den zweiten Steckblock (5) und den dritten Dichtungsring (21) und zum Erzielen von Dichtung verwendet wird.

5. Schnellverbinder mit der Zweiwege-Prüffunktion nach Anspruch 4, **dadurch gekennzeichnet, dass** das zweite elastische Element (6) eine Feder ist und sich im inneren Hohlraum des Befestigungsrings (17) befindet, wobei ein dem zweiten Steckblock (5) naheliegendes Ende des zweiten elastischen Elements (6) am Befestigungsring (17) montiert ist, wobei die Auswerferstange (7) fest mit einem Anschlagabschnitt (19) zum Befestigen des anderen Endes des zweiten elastischen Elements (6) versehen ist, und der Endteil des Schnellsteckers (1) in der Lage ist, am Anschlagabschnitt (19) anzuschlagen, nachdem die Auswerferstange (7) am ersten Steckblock (3) anschlägt und diesen schiebt, um ihn um eine gewisse Distanz zu bewegen.

6. Schnellverbinder mit der Zweiwege-Prüffunktion nach Anspruch 5, **dadurch gekennzeichnet, dass** die innere Wand des Befestigungsrings (17) mit einer Rinne (23) zum Führen des Anschlagabschnitts (19) versehen ist, wobei der Anschlagabschnitt (19) verschiebbar mit der Rinne (23) verbunden ist, und wobei die der Auswerferstange (7) abgewandte Endfläche des Anschlagabschnitts (19) mit einer geneigten Fläche (24) versehen ist, was komfortabel ist, um den Anschlagabschnitt (19) vom inneren Hohlraum des Befestigungsrings (17) in die Rinne (23) einzurasten.

7. Schnellverbinder mit der Zweiwege-Prüffunktion nach Anspruch 6, **dadurch gekennzeichnet, dass** der Anschlagabschnitt (19) und die Rinne (23) beide so angeordnet sind, dass sie gleichmäßig um die Auswerferstange (7) verteilt sind.

8. Schnellverbinder mit der Zweiwege-Prüffunktion nach Anspruch 5, **dadurch gekennzeichnet, dass** der Anschlagabschnitt (19) mit einer Rastnut (22) versehen ist, in die der Endteil des zweiten elastischen Elements (6) einrastet.

9. Schnellverbinder mit der Zweiwege-Prüffunktion nach Anspruch 4, **dadurch gekennzeichnet, dass** die innere Wand des Schnellverbinders (2) mit einer Montagenut (18) zum Montieren des Befestigungsrings (17) versehen ist, wobei der Befestigungsring (17) an der Bodenfläche der Montagenut (18) anschlägt und die Position des Befestigungsrings (17) definiert, wobei sich der zweite Dichtungsring (20) zwischen der Seitenwand des Befestigungsrings (17) und der Seitenwand der Montagenut (18) befindet.

## Revendications

1. Raccord rapide avec une fonction d'écoulement bidirectionnel, comprenant un bouchon rapide (1) et un raccord rapide (2), entre le bouchon rapide (1) et le raccord rapide (2) étant agencé un mécanisme d'écoulement bidirectionnel, le mécanisme d'écoulement bidirectionnel comprenant un premier bloc de mise en prise (3) raccordé de manière coulissante à une cavité intérieure du bouchon rapide (1), un premier élément élastique (4) agencé dans la cavité intérieure du bouchon rapide (1) et entraînant le premier bloc de mise en prise (3) pour qu'il se déplace vers la direction du raccord rapide (2), un deuxième bloc de mise en prise (5) raccordé de manière coulissante à une cavité intérieure du raccord rapide (2), un deuxième élément élastique (6) agencé dans le raccord rapide (2) et entraînant le deuxième bloc de mise en prise (5) pour qu'il se déplace vers la direction du bouchon rapide (1) et une tige d'éjection (7) agencée dans le deuxième bloc de mise en prise (5) et capable de pousser le premier bloc de mise en prise (3) après qu'il a été mis en prise dans le bouchon rapide (1), le premier élément élastique (4) entraînant le premier bloc de mise en prise (3) pour qu'il soit capable de mettre en prise le bouchon rapide (1) après qu'il s'est déplacé vers la direction du raccord rapide (2) et le deuxième élément élastique (6) entraînant le deuxième bloc de mise en prise (5) pour qu'il soit capable de mettre en prise le connecteur (2) rapide après qu'il s'est déplacé vers la direction du bouchon rapide (1) lorsque le bouchon rapide (1) est séparé du raccord rapide (2), le premier bloc de mise en prise (3) est doté d'une rainure de butée (14) pour recevoir et pour que le premier élément élastique (4) vienne en butée contre elle, la paroi latérale de la rainure de butée (14) étant dotée d'une pluralité de rainures creuses (15), **caractérisé en ce que** la paroi latérale du premier bloc de mise en prise (3) est dotée d'une pluralité de plaques de guidage (16) pour guider la direction de déplacement du premier bloc de mise en prise (3) .

2. Raccord rapide avec la fonction d'écoulement bidirectionnel selon la revendication 1, **caractérisé en ce qu'**une tête de montage (8) raccordée à une conduite est agencée à une extrémité, à l'opposé du raccord rapide (2), du bouchon rapide (1), une cavité mobile (9) pour recevoir le premier bloc de mise en prise (3) étant agencée à la position de l'extrémité de raccordement entre la tête de montage (8) et le bouchon rapide (1), une portion de tête de mise en prise (10) étant agencée à une extrémité, faisant face au raccord rapide (2), du premier bloc de mise en prise (3), la portion de tête de mise en prise (10) étant dotée d'une première bague d'étanchéité (11), une bague convexe (12) pour que la portion de tête de mise en prise (10) et la première bague d'étanchéité (11) viennent en butée contre elle étant formée d'un seul bloc sur la paroi intérieure du bouchon rapide (1).

3. Raccord rapide avec la fonction d'écoulement bidirectionnel selon la revendication 2, **caractérisé en ce que** la paroi intérieure de la tête de montage (8) est raccordée de manière fixe à un levier de limitation (13) pour qu'une extrémité, à l'opposé du premier bloc de mise en prise (3), du premier élément élastique (4) vienne en butée contre elle.

4. Raccord rapide avec la fonction d'écoulement bidirectionnel selon la revendication 1, **caractérisé en ce que** la cavité intérieure du raccord rapide (2) est dotée d'une bague de fixation (17), une deuxième bague d'étanchéité (20) étant agencée entre la première bague de fixation (17) et la paroi intérieure du raccord rapide (2), et le deuxième bloc de mise en prise (5) est doté d'une troisième bague d'étanchéité (21) capable de venir en butée contre la bague de fixation (17), une extrémité, à l'opposé du bouchon rapide (1), de la bague de fixation (17) servant à ce que le deuxième bloc de mise en prise (5) et la troisième bague d'étanchéité (21) viennent en butée contre elle et parvenir à l'étanchéité.

5. Raccord rapide avec la fonction d'écoulement bidirectionnel selon la revendication 4, **caractérisé en ce que** le deuxième élément élastique (6) est un ressort, et est situé dans la cavité intérieure de la bague de fixation (17), une extrémité, près du deuxième bloc de mise en prise (5), du deuxième élément élastique (6) étant montée au niveau de la bague de fixation (17), la tige d'éjection (7) étant dotée de manière fixe d'une portion de butée (19) pour fixer l'autre extrémité du deuxième élément élastique (6), et la partie d'extrémité du bouchon rapide (1) est capable de venir en butée contre la portion de butée (19) après que la tige d'éjection (7) est venue en butée et a poussé le premier bloc de mise en prise (3) pour qu'il se déplace sur une certaine distance.

6. Raccord rapide avec la fonction d'écoulement bidirectionnel selon la revendication 5, **caractérisé en ce que** la paroi intérieure de la bague de fixation (17) est dotée d'une glissoire (23) pour guider la portion de butée (19), la portion de butée (19) étant raccordée de manière coulissante à la glissoire (23), et la surface d'extrémité, éloignée de la tige d'éjection (7), de la portion de butée (19) étant dotée d'une surface inclinée (24) qui est appropriée pour que la portion de butée (19) soit encliquetée dans la glissoire (23) à partir de la cavité intérieure de la bague de fixation (17).

7. Raccord rapide avec la fonction d'écoulement bidirectionnel selon la revendication 6, **caractérisé en ce que** la portion de butée (19) et la glissoire (23) sont toutes deux agencées pour être distribuées uniformément autour de la tige d'éjection (7).

8. Raccord rapide avec la fonction d'écoulement bidirectionnel selon la revendication 5, **caractérisé en ce que** la portion de butée (19) est dotée d'une rainure d'encliquetage (22) dans laquelle la partie d'extrémité du deuxième élément élastique (6) est encliquetée.

9. Raccord rapide avec la fonction d'écoulement bidirectionnel selon la revendication 4, **caractérisé en ce que** la paroi intérieure du raccord rapide (2) est dotée d'une rainure de montage (18) pour monter la bague de fixation (17), la bague de fixation (17) venant en butée sur la surface inférieure de la rainure de montage (18) et définissant la position de la bague de fixation (17), la deuxième bague d'étanchéité (20) étant située entre la paroi latérale de la bague de fixation (17) et la paroi latérale de la rainure de montage (18).
